# EUROPEAN PATENT SPECIFICATION

(11) **EP 3 085 432 B1**
(45) Date of publication and mention of the grant of the patent: **20.12.2017**
(21) Application number: 15164574.4
(22) Date of filing: 22.04.2015
(51) Int. Cl.: B01D 67/00, H01M 2/16, B01D 69/02, B01D 69/14, B01D 71/02, B01D 71/08

(54) **SEPARATOR FOR AN ELECTROCHEMICAL DEVICE AND METHOD FOR THE PRODUCTION THEREOF**
SEPARATOR FÜR EINE ELEKTROCHEMISCHE VORRICHTUNG UND VERFAHREN ZU DESSEN HERSTELLUNG
SÉPARATEUR POUR DISPOSITIF ÉLECTROCHIMIQUE ET SON PROCÉDÉ DE PRODUCTION

(43) Date of publication of application: 26.10.2016
(73) Proprietor: Karlsruher Institut für Technologie, 76131 Karlsruhe (DE)
(72) Inventor: VIEIRA CARVALHO, Diogo, 89075 Ulm (DE); KIM, Guktae, 89075 Ulm (DE); LÖFFLER, Nicholas, 89073 Ulm (DE); PASSERINI, Stefano, 89073 Ulm (DE)
(74) Representative: Herzog, Fiesser & Partner Patentanwälte PartG mbB

(56) References cited:
- WO-A1-2009/119262
- WO-A1-2014/179355
- JP-A- 2010 202 987
- KR-A- 20140 072 696
- US-A1- 2015 037 651

## Description

### Field of the invention

The present invention relates to a separator for an electrochemical device, a method for producing this kind of separator and the electrochemical device comprising this kind of separator.

### Related art

Modern electrochemical devices, in particular electrochemical cells, which may be used for storing and providing electrical energy from chemical reactions, usually comprise a separator, wherein the separator is typically placed between at least one first half-cell comprising at least one positive electrode and at least one second half-cell comprising at least one negative electrode. In order to provide an ionic conducting path between the two half-cells, in particular by a transport of ions, generally, at least one electrolyte is employed. For this purpose and in order to avoid a short circuit between the positive electrode and the negative electrode, the separator, advantageously, takes the form of a membrane which comprises an insulating material exhibiting a porous composition which is adapted for receiving and providing the electrolyte and for enabling the transport of the ions between the two different types of the electrodes.

Commercially available separators are typically based on membranes which are produced from polyolefin materials, preferably, from polyethylene (PE), polypropylene (PP), or a combination thereof. In addition to their low associated cost, the polyolefin-based separators are known to exhibit a good electrochemical performance for a number of applications and to provide an acceptable safety with regard to avoiding short circuits. Generally, the polyolefin-based separator membranes can be produced by using one of two known processes. For this purpose, a dry process may be employed which involves one or more stretching steps with regard to the separator membrane in order to form pores, in particular as micropores, which are required to enable a good permeability of the ions, such as lithium ions, in the electrochemical device, such as a lithium ion cell. Alternatively, a wet process, which may also be denominated as "phase inversion process", may be performed, wherein, usually, at least one polyolefin resin dissolved in a suitable liquid solvent is employed, by which, after evaporating the solvent, the porous separator membrane is formed.

However, the polyolefin materials, unfavorably, have a melting point at comparatively low temperatures, in particular approximately 130 °C for polyethylene and approximately 160 °C for polypropylene. Thus, when the porous polyolefin membrane begins to melt, it also commences to close the pores, whereby the chemical reaction in the electrochemical cell comprising this kind of separator membrane may be interrupted. J.-J. Woo, Z. Zhang, N. L. Dietz Rago, W. Lu, K. Amine, Journal of Materials Chemistry A, 2013, 1, 8538-8540, therefore propose a three-layer separator (PP/PE/PP) which employs an inner layer comprising PE being embedded between two outer layers comprising PP that exhibits a higher melting point compared to that of the PE.

Alternatively, in order to further increase the melting point of the separator membranes, inorganic particles, in particular inorganic particles comprising alumina (Al₂O₃), silica (SiO₂), or calcium carbonate (CaCO₃), have been employed, in a first case, as a coating layer placed on the polyolefin-based separators, or, in a second case, as filling particles within the separator membrane. With regard to the first case, separator membranes which have been coated with a thermally stable layer comprising the inorganic particles are already commercially available. As an example, US 2010/221965 A1 discloses this kind of separator membrane and a method for its production, wherein a slurry comprising heat-resistant insulating fine particles, in particular alumina or boehmite, i.e. aluminum oxide hydroxide (γ-AlO(OH)), is employed for producing an insulating layer on one of the two electrodes on a porous base material, such as in form of a microporous film. Herein, the microporous film is made of a thermoplastic resin with a melting point of 80 °C to 150 °C. With respect to the second case, the separator membrane may be prepared by a dispersion of the inorganic particles in a binder solution, in particular by using a poly(vinylidene fluoride) (PVdF). According to P. Arora, Z. Zhang, Chemical Reviews 2004, 104, 4419-4462, in both cases the above-described wet process, a wet-laid process or an electro-spinning process may be employed in order to obtain the porous membranes.

As described above, the currently commercially mostly used separators for lithium-ion batteries are predominantly manufactured with polypropylene (PP) and polyethylene (PE), which, however, exhibit low melting points approximately from 130 °C to 160 °C.

According to S.S. Zhang, Journal of Power Sources 2007, 164, 351-364, major limitations of the polyolefin-based separator membranes can be attributed to their narrow safety margin for a transversal and a horizontal shrinkage at high temperatures when the battery is under overcharge and to a poor wettability of the separator membrane by the electrolyte. Further, the low melting points of the polyolefin materials also prevents drying the electrodes and the separator together in a one-step process which would be technically advantageous. Therefore, the step of drying the electrodes and the separator during the manufacturing of the lithium-ion batteries is, thus, performed in a multi-step process.

WO 2014/179355 A1 describes nanoporous composite separators for use in batteries and capacitors, comprising a nanoporous inorganic material comprising Al₂O₃, AIO(OH), AlN, BN, SiN, ZnO, ZrO₂, SiO₂, or combinations thereof, and an organic polymer material selected from a polyvinylidene difluoride and copolymers thereof, polyvinyl ethers, urethanes, acrylics, cellulosics, styrenebutadiene copolymers, natural rubbers, chitosan, nitrile rubbers, silicone elastomers, PEO or copolymers thereof, polyphosphazenes, and combinations thereof.

JP 2010 202987 A discloses composite sheet materials that can be used as battery separator, wherein the sheet materials comprise a polymeric material composed of cellulose, i.e. a polysaccharide, which are mixed with an inorganic oxide filler, such as silica or alumina. Similar materials to be used as battery separator are further disclosed in US 2015/037651 A1, KR 2014 0072696 A, and WO 2009/ 119262 A1.

### Problem to be solved

It is therefore an objective of the present invention to provide a separator for an electrochemical device, a method for producing this kind of separator and the electrochemical device which comprises this kind of separator which at least partially overcomes the above-mentioned problems of the state of the art.

It is a particular objective of the present invention to provide a method for producing the separator at higher temperatures without causing any thermal or chemical reactions within the separator membrane, thus, being capable of enabling alternative drying procedures for components of the electrochemical cell, preferentially drying the electrodes and the separator during the manufacturing of the electrochemical device in a one-step process.

It is a further objective of the present invention to provide a separator for an electrochemical device which, on one hand, may exhibit a higher degree of safety, particularly in a case in which an unusual amount of heat may be generated, and which, on the other hand, may be accessible via a low-cost and an environmentally sustainable production method.

### Summary of the invention

This problem is solved by a separator for an electrochemical device, a method for producing this kind of separator and the electrochemical device which comprises this kind of separator with the features of the independent claims. Preferred embodiments, which might be realized in an isolated fashion or in any arbitrary combination, are listed in the dependent claims.

As used in the following, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, as used in the following, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

In a first aspect, the present invention relates to a separator for an electrochemical device. As described above, the term "electrochemical device", which may also be denoted by the term "electrochemical cell", may, particularly, be used for storing and providing electrical energy from chemical reactions which are performed within the electrochemical device. For this purpose, the electrochemical device comprises at least one first half-cell comprising at least one positive electrode and at least one second half-cell comprising at least one negative electrode, wherein the two half-cells are separated from each other in order to avoid a short circuit. In the electrochemical cells as addressed here, the half-cells are, thus, separated by an additional insulating material which is, generally, denoted by a term "separator". As described below in more detail, the separator is, thus, placed between the at least one positive electrode and the at least one negative electrode. However, in order to simultaneously provide an electrically conducting path between the two different types of the electrodes, in particular by a transport of ions, generally, at least one electrolyte is used. In order to be particularly suited for this purpose, the separator, thus, advantageously takes the form of a membrane which exhibits a porous composition being adapted for both receiving and providing the electrolyte and enabling the transport of the ions between the two different types of the electrodes.

According to the present invention, the porous composition which is used as the separator membrane comprises a galactomannan and inorganic filling particles.
As used herein, the term "polysaccharide" refers to a class of polymers, which, according to the definition of the "polymers", comprises monomeric units which are, predominantly, covalently bonded in order to form larger structural entities, i.e. the polymer. Herein, polysaccharides are generally considered as one of the three major classes of biopolymers, i.e. polymers produced by living organisms, which may be classified according to the monomeric unit involved in their structural entities. In contrast to polynucleotides, such as RNA and DNA, which comprise nucleotides as the monomeric units, and to polypeptides, which make use of amino acids as the monomeric units, polysaccharides employ carbohydrate structures as their monomeric units. Thus, polysaccharides can be considered as polymeric carbohydrate molecules which, generally, comprise chains of monosaccharide or oligosaccharides units. For this purpose, monosaccharides, such as glucose, fructose, and glyceraldehyde, which may be described by the general formula (CH₂O)ₙ, wherein n may be three or more, might be bound together by glycosidic linkages and, upon hydrolysis, may result in the monosaccharide or the oligosaccharides, which may, subsequently, be employed as the monomeric units for forming the polysaccharides. With regard to their structures, both linear and branched polysaccharides are known. In contrast to synthetic polymers, biopolymers, such as polysaccharides, exhibit a number of advantages, in particular that they may be acquired from renewable resources, that they may be treated by using environmentally benign processes and that they may, generally, be considered as being biodegradable. According to their predominant function, polysaccharides may be divided into storage polysaccharides, which particularly comprise starch and glycogen, and into structural polysaccharides, which particularly comprise cellulose, chitin, callose, laminarin, chrysolaminarin, xylan, arabinoxylan, mannan, fucoidan, and galactomannan and which may, in particular due to their function, preferably be used for the purpose of the present invention. According to the present invention, the porous composition comprises a galactomannan as a polymeric material for the separator membrane. As further used herein, the term "galactomannan" refers to polysaccharides which comprises a mannose backbone that is equipped with one or more side groups of galactose. Preferably, the porous composition in the separator membrane comprises the polymeric material selected from one or more of a guar gum, a fenugreek gum, a tara gum, and a locust bean gum, wherein each of the polymeric materials belongs to the group of the galactomannans in a manner that the mannose : galactose ratio is approximately 2 : 1 for the guar gum, approximately 1 : 1 for the fenugreek gum, approximately 3 : 1 for the tara gum, and approximately 4 : 1 for the locust bean gum, also known as carob gum.
As will be described below in more detail, the guar gum may, more preferably, be used as the polymeric material in the separator membrane. The guar gum, also denoted as "guaran", may be obtained from endosperms of guar beans. For this purpose, guar seeds may be dehusked, ground and screened in order to obtain the guar gum, in particular in form of a white powder. The guar gum exhibits a high solubility in water and the separator comprising the guar gum proved to be particularly stable with respect to the applied voltages.
Herein, the porous composition may, preferably, comprise the galactomannan in a natural form, such as naturally provided. However, the porous composition may comprise the galactomannan in a hydroxypropylated form, or, also preferred, in a form which comprises at least one quaternary ammonium cation. As shown by experimental results, the guar gum in the hydroxypropylated form exhibited the best properties with respect to a performance as the separator in the electrochemical cell. In addition, the guar gum in the hydroxypropylated form exhibits a self-hydrating property at room temperature and is, thus, stable with respect to an electrolyte comprising a liquid solution of salts, such as Na⁺ Cl⁻ in water.
As mentioned above, the porous composition according to the present invention which is used as the separator membrane furthermore comprises inorganic filling particles, which, preferably are mixed with the galactomannan, in particular in order to form a homogeneous mixture. Especially to accomplish a good mixing of the constituents of the porous composition, the inorganic particles might exhibit a mass-median diameter, also abbreviated to "D₅₀", which may take a value from 0.5 µm to 2.5 µm. As used herein, the term "mass-median diameter" refers to a quantity related to a particle-size distribution of the particles which is generally assumed to provide an average particle diameter with respect to the weight of the particles. Preferably, the porous composition may, thus, comprise a first portion having 10 wt.% to 40 wt.% of the galactomannan and a second portion having 60 wt.% to 90 wt.% of the inorganic particles, wherein, however, the sum of the first portion and of the second portion may be added up not to exceed 100 wt.%. Thus, the porous composition may be, on one hand, be a pure mixture or may, on the other hand, also be furnished with additives, which may, as known to the skilled person, be capable for imparting additional properties to the porous composition.

In particular, inorganic particles selected from particles which may comprises one or more of silica (SiO₂), calcium carbonate (CaCO₃), alumina (Al₂O₃), or aluminum oxide hydroxide (AIO(OH)), may be employed as the inorganic filling particles for the porous composition. It may be emphasized that this selection may also include glass particles, in particular silica-based glass particles, more particularly soda-lime glass particles, i.e. amorphous particles comprising silica, sodium oxide (Na₂O), lime (CaO), and, usually, further additives. Other kinds of inorganic particles may also be feasible. However, particles comprising silica, such as silica particles or glass particles, in particular at least 50 wt.% silica, more particular at least 75 wt. % silica, may preferably be used, in particular based on the following two reasons. A first reason for this choice may be attributed to a high hydrophilicity of the silica particles which may allow accomplishing a good wettability of the separator membrane equipped with silica particles with nonaqueous liquid electrolytes, which may, thus, enable an improved cycling performance of the electrochemical device. Further, a second reason may relate to desiccant features of the silica, thus, providing a high capability for scavenging trace amounts of acidic impurities, in particular HF molecules, which may undesirably be present within the electrolyte. Removing the trace amounts from the electrolyte may improve both the cycling performance and the safety of the electrochemical device equipped with the separator membrane according to the present invention.

In a particularly preferred embodiment, the separator may take a form of a self-standing membrane. As further used herein, the term "self-standing" may relate to a membrane which may exhibit a mechanical strength by which it might be capable of preserving its form without being required to rely on a substrate. As a result, the form of the self-standing membrane may enable cutting the separator into pieces comprising an arbitrary form without being required to observe any restrictions which may otherwise be imposed on the form of the pieces by the substrate. In the production of the electrochemical device, the separator membrane or the pieces thereof may, thus, allow an easy handling, such as by allowing a simply inserting of the separator membrane between the two kinds of electrodes. For achieving the self-standing property of the separator according to the present invention, the membrane may exhibit a thickness from 5 µm to 500 µm, preferably from 10 µm to 100 µm, more preferred from 30 µm to 50 µm, most preferred from 40 µm.

In a further aspect, the present invention relates to a method for producing a separator for an electrochemical device, in particular the separator as described above and/or below. The method comprises the following steps a) to d):
a) providing a galactomannan, inorganic filling particles, and a polar solvent;
b) dissolving the galactomannan in the solvent and letting it swell to become a colloidal suspension;
c) dispersing the inorganic filling particles in the suspension; and
d) drying the suspension, by which step the separator is obtained.
Herein, the indicated steps may, preferably, be performed in the given order, commencing with step a) and finishing with step d). However, any or all of the indicated steps may also be repeated several times and/or preformed concurrently in part.

According to step a), the galactomannan, the inorganic filling particles, and the polar solvent are provided for producing the separator for the electrochemical device. With regard to the galactomannan and the inorganic filling particles reference may be made to the description of the separator as above and/or below. Consequently, a galactomannan, preferably a guar gum, particularly in form of a white powder, is selected as the polysaccharide whereas particles comprising silica, preferably silica particles or glass particles, may be used as the inorganic filling particles. With respect to the polar solvent, the solvent comprises a polar substance, in particular water, preferably distilled water, or a mixture of water, preferably distilled water, with another polar protic solvent, preferably ethanol. As used herein, the term "protic solvent" refers to a molecule having a hydrogen atom which is loosely bound to an oxygen atom, such as the oxygen atom in a hydroxyl group, or to a nitrogen atom, such as the nitrogen atom in an amine group, in a manner that is may exhibit a high tendency to leave the molecule in form of a proton H⁺.

According to step b), the galactomannan is dissolved in the solvent and, subsequently, let to swell in order to become a colloidal suspension. Herein, the galactomannan acts as binder which may, in particular, be used for providing a high mechanical strength to the separator. As used herein, the term "colloidal suspension" refers to a kind of dispersion in which dispersed insoluble particles are suspended throughout a suspension medium, i.e. the solvent. In contrast to a solution, wherein a solute and the solvent constitute a single phase, the colloidal suspension exhibits a dispersed phase, comprising the suspended particles, and a continuous phase, comprising the suspension medium. In order to obtain the colloidal suspension, a rigorous stirring over a first duration from 5 minutes to 2 hours, preferably from 10 minutes to 1 hour, may be performed in order to accomplish a complete swelling of the galactomannan. According to step c), the inorganic filling particles, such as the silica particles or the glass particles, are dispersed in the suspension. In order to achieve a homogeneous dispersion of the inorganic filling particles within the colloidal suspension as acquired as a result of performing step b), a further stirring over a second duration from 10 minutes to 5 hours, preferably from 30 minutes to 2 hours, may be performed.

According to step d), the suspension comprising the galactomannan, the inorganic filling particles, and the solvent, is dried, by which step the desired separator is obtained. Preferably, the drying process during step d) is supported by applying a heat treatment of the suspension, in particular by applying a temperature in from 100 °C to 220 °C, preferably from 150 °C to 200 °C, mostly preferred about 180 °C, to the suspension. Herein, the heat treatment may, preferably, be applied over a third duration from 10 minutes to 5 hours, preferably from 30 minutes to 2 hours. As will be described below in more detail, the indicated temperature range may allow a simultaneous drying of the separator with the electrodes of the electrochemical device.
In a particularly preferred embodiment, prior to drying the suspension according to step d) at the temperature from 100 °C to 220 °C, the suspension may be subject to a pre-drying step, in which the suspension may be pre-dried at a lower temperature compared to the drying step according to step d), preferably above room temperature to 95 °C, in particular from 50 °C to 90 °C, more particularly at 80 °C, preferably over a fourth duration from 10 minutes to 5 hours, preferably from 30 minutes to 2 hours. As used herein, the term "room temperature" refers to a temperature from 15 °C to 30 °C, preferably from 20 °C to 25 °C. Splitting the drying process of the suspension into two separate steps, i.e. the pre-drying step as described here and the drying step according to step d), may contribute to an energy-saving procedure during the production of the membrane.
In a particularly preferred embodiment, prior to the drying, i.e. prior to both the pre-drying step and the drying step according to step d), the suspension may be applied to a substrate, in particular to hydrophobic substrate, in particular to a polytetrafluoroethylene (PTFE) substrate. Further, the dried separator may, after the drying, be removed from the substrate and, thus, obtained as the self-standing membrane.
In a further aspect, the present invention relates to an electrochemical device, also denominated as an electrochemical cell, which comprises the separator as described above and/or below, in particular the separator produced according to the method as described above and/or below. Herein, the separator is embedded, in particular in form of the self-standing membrane or a part thereof, between the at least one positive electrode and the at least one negative electrode particularly comprised as half-cells within the electrochemical device. Further, the porous composition as comprised by the separator is adapted for receiving and providing at least one electrolyte required for providing an electrically conducting path between the positive electrode and the negative electrode. For further details concerning the separator, reference may be made to the description of the separator as above and/or below.
In a particular preferred embodiment, the positive electrode may comprise a nickel manganese cobalt oxide (NMC) electrode material while metallic lithium or graphite may be used for the negative electrode. However, other kinds of electrode materials, such as those known by he skilled person, may also be feasible for being used as one of the electrodes in the electrochemical device.
Summarizing, a separator for an electrochemical device, in particular for a lithium-ion battery, is proposed, wherein a natural water-soluble polymer, in particular a galactomannan, preferably a guar gum, and inorganic filling particles, in particular particles comprising silica, more particular silica particles or glass particles, are used. Advantageously, the separator exhibits an improved thermal stability and a high wettability.
With respect to the thermal stability, the separator exhibits a high stability at elevated temperatures and may, thus, be applicable in large-size lithium-ion batteries, which may, for example, be used in electric vehicles, hybrid-electric vehicles and large energy-storage systems. As described above, the improved thermal stability may be a result of combining the galactomannan, such as the guar gum polymer, which is thermally stable up to 220°C, with heat-resistant inorganic filling particles which have a high thermal conductivity, thus, allowing heat dissipation within the electrochemical device at a considerably fast rate.
As already mentioned above, the safety of an electrochemical device, being one of the most important factors in the development of the next generation of batteries, may, thus be improved by the high thermal stability of the separator membrane according to the present invention, which may avoid a contact between the different types of the electrodes even in a case in which the electrochemical device may be under overcharge. Since the galactomannans, preferably the guar gum polymer, are thermally stable to temperatures up to 220°C, it may, thus, further be possible to perform the steps of drying of the electrodes and of drying the separator in a one-step process.
In particular as a result of an abundance and of an environmental compatibility of the materials as used in the present separator, the method for producing the separator may be performed as a comparatively simple and low-cost manufacturing process. Additionally, the use of the natural galactomannan polymer, thus, avoids a dependency on non-renewable sources. Consequently, the separator according to the present invention may, thus, provide a contribution to the development of a "green" and environmentally benign battery. Whereas typical separators according to the state of the art require water-insoluble materials which are processed by using various binders and dispersing agents that may diminish the environmental compatibility additionally, the separator according to the present invention may only comprise the natural galactomannan polymer, environmentally benign inorganic filling particles, and, during its production, water.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:
- Figure 1: shows the first charge/discharge cycle of an electrochemical cell equipped with a separator membrane according to the present invention; and
- Figure 2: shows the specific capacity of the electrochemical cell equipped with the separator according to the present invention over a number of sixty charge/ discharge cycles with indicated charge rates of C/10, C/2, 5C and 1C, respectively.

### Detailed description of the embodiments

### I. Production of a separator

A preferred embodiment of a separator according to the present invention was produced according to the above presented method for producing a separator.

First, the following substances were provided according to step a), i.e. a hydroxypropylated guar gum as a preferred example for a galactomannan, a powder comprising silica particles which (SiO₂; mass-median diameter D₅₀: 1.0 µm) as a preferred example for inorganic filling particles, and distilled water as a preferred example for a polar solvent.

Alternatively, a solution comprising distilled water and ethanol in a mixture of 7:3 with respect to weight was used as the polar solvent. It has experimentally been found that the hydroxypropylated guar gum may also be solvable in an aqueous solution comprising up to 30 wt.% of methanol and/or ethanol.

Then, an amount of the hydroxypropylated guar gum was dissolved in 11 ml distilled water under vigorous magnetic stirring for at least 30 minutes at room temperature in order to ensure the complete swelling of the polymer, whereby the desired colloid suspension according to step b) was obtained.

Thereafter, the powder comprising the silica particles was added into the suspension, thereby choosing a 1:4 ratio per weight between the hydroxypropylated guar gum and the silica particles, and the suspension was stirred for at least 2 hours at room temperature in order to completely disperse the silica particles in the suspension according to step c).

As an additional optional step, the suspension comprising the hydroxypropylated guar gum and the silica particles was, subsequently, cast on a planar polytetrafluoroethylene (PTFE) substrate by employing a glass bar in order to obtain, after drying, the separator in form of a membrane.

Finally, the suspension underwent a drying process, which was split into two separate steps, i.e. a pre-drying step as described here and the drying step according to step d).

During the pre-drying step, the wet-coated separator was pre-dried at room temperature for at least 2 hours and, afterwards, in an atmospheric oven at 80 °C for 1 hour. According to step d), the pre-dried separator was then further dried at 180 °C under vacuum for 2 hours.

As a result, the desired separator was obtained after drying, comprising a composition of 80 wt.% silica and 20 wt.% hydroxypropylated guar gum, in form of a self-standing membrane, exhibiting an average thickness of approximately 40 µm.

### II. Electrode preparation

Prior to producing an embodiment of the electrochemical device according to the present invention, an NMC cathode electrode was prepared according to the following description.

As a binder, an amount of sodium carboxymethyl cellulose (CMC; substitution degree 1.2) was dissolved in 4.5 ml of distilled water. As a conductive agent, an amount carbon black (average primary particle size 30 nm) was subsequently added to the solution. Thereafter, commercially available nickel manganese cobalt oxide (NMC; average particle size of 10 µm) was added to obtain a cathode slurry. Then, the slurry was cast on an aluminum foil (Al; thickness 20 µm, purity > 99.9 %) by using a laboratory scale doctor blade. The electrode coated on the aluminum foil was, subsequently, dried at a temperature of 180 °C under vacuum for 12 hours. The composition of the dried cathode electrode could be determined to 88 wt.% NMC, 7 wt.% carbon black, and 5 wt.% CMC, wherein an average mass loading of the electrode could be estimated as approximately 4.1 mg cm⁻².

### III. Production of the electrochemical device

The preferred embodiment of the electrochemical device according to the present invention was produced by using the separator as produced according to Section I.

For this purpose, a number of lab-scale pouch bag cells each comprising one of the NMC cathode electrodes as produced according to Section II was assembled inside a dry-room (remaining humidity < 0.1% at 20 °C). 1M lithium hexafluorophosphate (LiPF₆) dissolved in a ethylene carbonate/dimethyl carbonate (EC:DMC) solution in a ratio of 1:1 per weight was utilized as an electrolyte while a piece of the membrane as produced according to Section I was used as the separator. A lithium metal foil (Li; thickness of 50 µm) served as a counter electrode.

### IV. Characterization of the electrochemical device

Electrochemical investigations of the electrochemical device were performed at 20 ± 1 °C by employing a commercially available battery tester. For this purpose, charge rates of C/10, C/2, 5C and 1C, wherein the charge rate of 1 C corresponds to a specific current of 161 mA g⁻¹, were applied to the NMC-based half-cells of the electrochemical device by using the separator membrane produced according to Section I. Hereby, the cut-off potentials were set to 3.0 and 4.3 V vs. Li/Li⁺, respectively.

An investigation of a thermal stability of the separator membrane was conducted by comparing a size of the employed piece of the membrane, before and after heating the piece of the membrane at 180 °C for 1 hour.

An investigation of a wettability of the separator membrane was performed by dropping a small amount of the electrolyte as described above on a surface of the piece of the separator and recording the time which could be observed for a complete wetting of the wetted piece of the separator.

### V. Experimental results

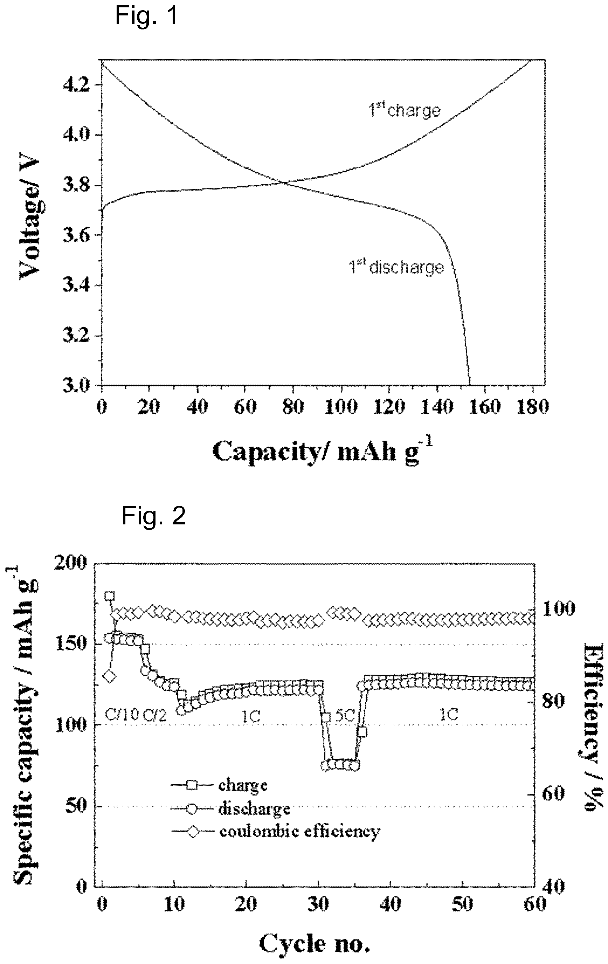

As presented in Figure 1, the NMC-based electrode using a piece of the separator membrane as produced according to Section I. shows a high specific discharge capacity of 153.8 mAh g⁻¹ at C/10 during the initial cycle.

As displayed in Figure 2, the electrochemical device comprising the NMC-based electrode and the piece of the separator membrane as produced according to Section I. shows a stable cycle performance for at least sixty cycles, thereby exhibiting a high discharge capacity of approximately 124.0 mAh g⁻¹ at 1C at the sixtieth cycle.

Further (not depicted here), the piece of the separator membrane as produced according to Section I. shows no significant shrinkage and good mechanical properties after the heating at 180 °C for 1 hour.

Finally, the piece of the separator membrane as produced according to Section I. exhibits a high wettability with a commercial electrolyte, which may, in particular, be due to the high hydrophilicity of the silica particles as described above.

## Claims

1. A separator for an electrochemical device, wherein the separator exhibits a porous composition comprising a galactomannan and inorganic filling particles.

2. The separator according to the preceding claim, wherein the porous composition comprises one or more of a guar gum, a fenugreek gum, a tara gum, or a locust bean gum.

3. The separator according to any one of the preceding claims, wherein the porous composition comprises the galactomannan in a natural form, in a hydroxypropylated form, or in a form comprising at least one quaternary ammonium cation.

4. The separator according to any one of the preceding claims, wherein the inorganic filling particles are inorganic particles comprising at least 50 wt.% silica (SiO₂).

5. The separator according to the preceding claim, wherein the inorganic particles exhibit a mass-median diameter (D₅₀) from 0.5 µm to 2.5 µm.

6. The separator according to any one of the preceding claims, wherein the porous composition comprising the galactomannan and the inorganic filling particles constitutes a homogeneous mixture.

7. The separator according to any one of the preceding claims, wherein the porous composition comprises a first portion having 10 wt.% to 40 wt.% of the galactomannan and a second portion having 60 wt.% to 90 wt.% of the inorganic filling particles, wherein the sum of the first portion and of the second portion adds up to 100 wt.% or below.

8. The separator according to any one of the preceding claims, wherein the separator takes a form of a self-standing membrane.

9. The separator according to the preceding claim, wherein the membrane exhibits a thickness from 5 µm to 500 µm.

10. A method for producing a separator for an electrochemical device according to any one of the preceding claims, the method comprising the following steps:
a) providing a galactomannan, inorganic filling particles, and a polar solvent;
b) dissolving the galactomannan in the solvent and letting it swell to become a colloid suspension;
c) dispersing the inorganic filling particles in the suspension; and
d) drying the suspension, by which step the separator is obtained.

11. The method according to the preceding claim, wherein the solvent comprises water, or a mixture of water with another polar protic solvent.

12. The method according to any one of the two preceding claims, wherein the drying is performed at a temperature from 100 °C to 220 °C.

13. The method according to any one of the three preceding claims, wherein, prior to the drying, the suspension is applied to a substrate and, after the drying, is removed from the substrate as a self-standing membrane.

14. An electrochemical device comprising at least one separator according to any of the preceding claims referring to the separator, wherein the separator is located between at least one positive electrode and at least one negative electrode, and wherein a porous composition as comprised by the separator is adapted for receiving and providing at least one electrolyte.

## Patentansprüche

1. Separator für eine elektrochemische Vorrichtung, wobei der Separator eine poröse Zusammensetzung aufweist, die ein Galactomannan und anorganische Füllstoffpartikel umfasst.

2. Separator gemäß dem vorstehenden Anspruch, wobei die poröse Zusammensetzung eines oder mehrere von einem Guargummi, einem Bockshornkleegummi, einem Taragummi oder einem Johannisbrotgummi umfasst.

3. Separator gemäß einem der vorstehenden Ansprüche, wobei die poröse Zusammensetzung das Galactomannan in einer natürlichen Form, in einer hydroxypropylierten Form oder in einer wenigstens ein quaternäres Ammonium-Kation umfassenden Form umfasst.

4. Separator gemäß einem der vorstehenden Ansprüche, wobei die anorganischen Füllstoffpartikel anorganische Partikel sind, die wenigstens 50 Gew.-% Siliziumdioxid (SiO₂) umfassen.

5. Separator gemäß dem vorstehenden Anspruch, wobei die anorganischen Partikel einen massebezogenen medianen Durchmesser (D₅₀) von 0,5 µm bis 2,5 µm aufweisen.

6. Separator gemäß einem der vorstehenden Ansprüche, wobei die poröse Zusammensetzung, die das Galactomannan und die anorganischen Füllstoffpartikel umfasst, ein homogenes Gemisch bildet.

7. Separator gemäß einem der vorstehenden Ansprüche, wobei die poröse Zusammensetzung einen ersten Teil mit 10 Gew.-% bis 40 Gew.-% des Galactommannans und einen zweiten Teil mit 60 Gew.-% bis 90 Gew.-% der anorganischen Füllstoffpartikel umfasst, wobei die Summe des ersten Teils und des zweiten Teils 100 Gew.-% oder weniger beträgt.

8. Separator gemäß einem der vorstehenden Ansprüche, wobei der Separator die Form einer selbststehenden Membran annimmt.

9. Separator gemäß dem vorstehenden Anspruch, wobei die Membran eine Dicke von 5 µm bis 500 µm aufweist.

10. Verfahren zum Herstellen eines Separators für eine elektrochemische Vorrichtung gemäß einem der vorstehenden Ansprüche, wobei das Verfahren die folgenden Schritte umfasst:
a) Bereitstellen eines Galactomannans, von anorganischen Füllstoffpartikeln und eines polaren Lösungsmittels;
b) Lösen des Galactomannans in dem Lösungsmittel und Quellenlassen, um eine kolloidale Suspension zu bilden;
c) Dispergieren der anorganischen Füllstoffpartikel in der Suspension; und
d) Trocknen der Suspension, durch welchen Schritt der Separator erhalten wird.

11. Verfahren gemäß dem vorstehenden Anspruch, wobei das Lösungsmittel Wasser oder ein Gemisch von Wasser mit einem anderen polaren protischen Lösungsmittel umfasst.

12. Verfahren gemäß einem der beiden vorstehenden Ansprüche, wobei das Trocknen bei einer Temperatur von 100 °C bis 220 °C durchgeführt wird.

13. Verfahren gemäß einem der drei vorstehenden Ansprüche, wobei vor dem Trocknen die Suspension auf ein Substrat aufgebracht wird und sie nach dem Trocknen als selbststehende Membran von dem Substrat entfernt wird.

14. Elektrochemische Vorrichtung, umfassend wenigstens einen Separator gemäß einem der vorstehenden Ansprüche, die sich auf den Separator beziehen, wobei der Separator zwischen wenigstens einer positiven Elektrode und wenigstens einer negativen Elektrode angeordnet ist und wobei eine poröse Zusammensetzung, die in dem Separator enthalten ist, dafür eingerichtet ist, wenigstens einen Elektrolyten aufzunehmen und bereitzustellen.

## Revendications

1. Séparateur pour un dispositif électrochimique, le séparateur présentant une composition poreuse comprenant un galactomannane et des particules de remplissage inorganiques.

2. Séparateur selon la revendication précédente, dans lequel la composition poreuse comprend un ou plusieurs constituants parmi une gomme de guar, une gomme de fenugrec, une gomme de tara, ou une gomme de caroube.

3. Séparateur selon l'une quelconque des revendications précédentes, dans lequel la composition poreuse comprend le galactomannane sous une forme naturelle, sous une forme hydroxypropylée, ou sous une forme comprenant au moins un cation ammonium quaternaire.

4. Séparateur selon l'une quelconque des revendications précédentes, dans lequel les particules de remplissage inorganiques sont des particules inorganiques comprenant au moins 50 % en poids de silice (SiO₂).

5. Séparateur selon la revendication précédente, dans lequel les particules inorganiques présentent un diamètre médian en masse (D₅₀) de 0,5 µm à 2,5 µm.

6. Séparateur selon l'une quelconque des revendications précédentes, dans lequel la composition poreuse comprenant le galactomannane et les particules de remplissage inorganiques constitue un mélange homogène.

7. Séparateur selon l'une quelconque des revendications précédentes, dans lequel la composition poreuse comprend une première partie ayant 10 % en poids à 40 % en poids du galactomannane et une deuxième partie ayant 60 % en poids à 90 % en poids des particules de remplissage inorganiques, la somme de la première partie et de la deuxième partie faisant 100 % en poids ou moins.

8. Séparateur selon l'une quelconque des revendications précédentes, le séparateur prenant la forme d'une membrane autoportante.

9. Séparateur selon la revendication précédente, la membrane présentant une épaisseur de 5 µm à 500 µm.

10. Procédé de production d'un séparateur pour un dispositif électrochimique selon l'une quelconque des revendications précédentes, le procédé comprenant les étapes suivantes :
a) se procurer un galactomannane, des particules de remplissage inorganiques, et un solvant polaire ;
b) dissoudre le galactomannane dans le solvant et le laisser gonfler pour devenir une suspension colloïdale ;
c) disperser les particules de remplissage inorganiques dans la suspension ; et
d) sécher la suspension, étape par laquelle le séparateur est obtenu.

11. Procédé selon la revendication précédente, dans lequel le solvant comprend de l'eau, ou un mélange d'eau avec un autre solvant polaire protique.

12. Procédé selon l'une quelconque des deux revendications précédentes, dans lequel le séchage est effectué à une température de 100 °C à 220 °C.

13. Procédé selon l'une quelconque des trois revendications précédentes, dans lequel, avant le séchage, la suspension est appliquée à un substrat et, après le séchage, est retirée du substrat sous la forme d'une membrane autoportante.

14. Dispositif électrochimique comprenant au moins un séparateur selon l'une quelconque des revendications précédentes se rapportant au séparateur, dans lequel le séparateur est situé entre au moins une électrode positive et au moins une électrode négative, et dans lequel une composition poreuse telle que comprise par le séparateur est adaptée pour recevoir et délivrer au moins un électrolyte.
